(19) Europäisches Patentamt
European Patent Office
Office européen des brevets

(11) EP 3 637 248 A1

(12) EUROPEAN PATENT APPLICATION

(43) Date of publication:
15.04.2020 Bulletin 2020/16

(51) Int Cl.:
G06F 7/58 (2006.01)

(21) Application number: 19202007.1

(22) Date of filing: 08.10.2019

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 09.10.2018 IT 201800009281

(71) Applicant: Fondazione Bruno Kessler
38122 Trento (IT)

(72) Inventors:
• MASSARI, NICOLA
  38057 PERGINE VALSUGANA (TN) (IT)
• GASPARINI, LEONARDO
  38057 FRAZ. MADRANO, PERGINE VALSUGANA
  (TN) (IT)
• PERENZONI, MATTEO
  38068 ROVERETO (TN) (IT)
• PANCHERI, LUCIO
  38122 TRENTO (IT)

(74) Representative: Marchioro, Paolo
Studio Bonini S.r.l.
Corso Fogazzaro, 8
36100 Vicenza (IT)

(54) **USE OF A SEMICONDUCTOR DEVICE FOR THE GENERATION OF RANDOM NUMBERS**

(57) A use, for the generation of random numbers, of a semiconductor device which comprises, monolithically integrated, an avalanche diode and injector means for carriers of charges. The injector means are operatively associated with the avalanche diode so that the carriers of charges generated by the injector means trigger the avalanche effect of the avalanche diode.

EP 3 637 248 A1

## Description

The present invention relates to the use of a semiconductor device for the generation of random numbers (Random Number Generator, RNG), in particular of true random numbers (True Random Number Generator, TRNG).

It is known that, currently, random number generators are used in several applications ranging from the scientific to the cryptographic field.

In the first case the typical example is the computational science in which the generation of a certain number of random initial states that serve as a description of the initial state of the simulation is required.

This type of application generally requires that the initial configurations are not closely related to each other but that they can be reproduced in a deterministic manner in order to verify, for example, the effect of variations on the codes that perform the same simulations. For this reason, these sequences are more correctly defined as Pseudo Random Number (PRN), because they are defined through complex algorithms starting from an initial value. In other words, given an initial random number, called "seed" in jargon, a formula, no matter how complex, will always reproduce the same sequence of random numbers. The relative generators are called Pseudo Random Number Generator (PRNG).

On the contrary, in the second case, that is in case of use of random numbers in cryptographic techniques for the execution, for example, of banking operations, this approach proves to be weak as it is necessary to ensure a perfect unpredictability of the sequences generated in order to maintain highly sensitive information secure. In this case, the most secure approach goes through the generation of random numbers obtained from a generation process that is true random and does not allow in any way the generated sequence to be predicted. These generators are known, precisely, as true random number generators (TRNG). In particular, quantum mechanisms, such as for example the generation of photons by a light source, are among the most investigated methods for obtaining such sequences of true random numbers and are based on an indeterminacy of the measured event that is inherent in the properties of the quantum system itself.

From the point of view of the information theory, the unpredictability level of the random numbers generated by both of these two aforesaid techniques can be expressed by the parameter defined as "entropy", known precisely as the amount of uncertainty or information present in a random variable.

It is also important to underline the fact that the NIST institute (National Institute of Standards and Technology) specifies, with the NIST SP800-22 directive, fifteen statistical tests that allow establishing whether a given random number generator has a sufficient level of entropy or not.

As already mentioned, the use of PRNG for cryptographic purposes is risky, not only because certain algorithms have weaknesses that potentially arise only time after their introduction, but also because, if an attacker were to recover the seed from which all random sequences are generated, he could predict all the following outputs with absolute certainty based on the same seed.

Therefore, a solution based on physical and in particular quantum phenomena is highly preferable given the intrinsic unpredictability of these events, even with subjects with a perfect knowledge of the algorithms used and with a high computing capacity. However, while the algorithms for generating pseudorandom numbers can be chosen to create sequences that have some well-defined statistical properties with absolute certainty, given precisely their deterministic nature, the random numbers obtained starting from physical phenomena must be subject to practical limitations, due for example to variations in the quality of the realisation of the instrumentation, to fluctuations in the power supply, to environmental factors such as external fields and temperature changes. In general, these deviations from the ideal case lead to a departure from a uniform and independent statistical distribution of measurable events in a sample space. Consequently, a lowering of the entropy level of also such true random number generators can be found.

To avoid this, these true random number generators need a further phase, called "post-processing", carried out after the extraction of the sequence of random codes starting from the specific physical phenomenon. In fact, this post-processing phase allows improving the uniformity of the probability distribution of the sequence of random codes. However, disadvantageously, this post-processing phase has an impact on the so-called "bit rate" that the generator is able to ensure.

It is also known, as already mentioned above, that one of the physical phenomena that is most exploited for the generation of true random numbers is quantum photonics. For this reason, these generators, belonging to the macro-category of the TRNG generators, are also indicated more specifically with the acronym QRNG (Quantum Random Number Generator).

In these generators, in fact, a source of attenuated light generates a few photons (low value of the flow of photons detected A) that are acquired by one or more detectors of single photons, each of which is known by the acronym SPAD (Single Photon Avalanche Diode). Moreover, the system provides for special electronics to be located downstream of the aforesaid SPADs, composed of auxiliary circuits and, usually, one or more TDCs (Time to Digital Converter) or of counters, capable of extracting a random sequence of bits from each of these SPADs by measuring the arrival time of the acquired photons or by counting their number.

From the implementation point of view, in these generators the light source and the detector or the detectors are separate devices that need to be properly coupled and shielded. However, disadvantageously, this implementation is evidently not immune to the influence of uncontrolled external environmental effects. Moreover, the fact that the light source and detector(s) are devices that are separated from each other and subsequently coupled makes the whole generator of random numbers quite vulnerable to possible break-ins and tampering.

Moreover, still disadvantageously, the aforesaid implementation causes a high cost of the device due to the need to optically couple the two devices.

It is also known that the flow of photons generated by these generators abides by a Poissonian process, in the sense that the acquired events are independent of each other and that the probability of counting n photons within an observation window $T_w$ follows the Poisson distribution:

$$P(x = n) = \frac{e^{-\lambda T_w} (\lambda T_w)^n}{n!}$$

wherein $\lambda$ indicates, in fact, the flow of detected photons.

The flow of detected photons $\lambda$, the characteristics of the SPAD detectors and the extraction mode of bits determine the final performance of the generator.

That being said, different types of random number generators based on the QRNG concept are available on the market. These generators, in particular, cover a wide range of applications, ranging from portable USB devices that supply a few hundreds of kbit/s, to large electronic systems capable of guaranteeing a bit rate of hundreds of Mbit/s. Moreover, in the literature, different logics and architectures have been proposed configured for the determination of true random number sequences starting from a physical phenomenon, in particular from the detection of photons. Most of them detects the "arrival time" or the number of photons that affect the sensitive surface of the SPAD detector or detectors.

In particular, as regards the technique based on the so-called arrival time, it has been proposed to measure the time between the incidence of a photon and the subsequent one on a single SPAD. However, although this technique allows obtaining a high bit rate, it has a considerable distortion (bias) due to the fact that, as already said, the source of photons abides by the aforesaid Poissonian process.

To obviate this drawback, the prior art proposes to intervene directly on the source of photons, by appropriately controlling the flow of photons generated by it. This intervention, in particular, provides for varying the driving current of the source of photons so as to make the statistical distribution thereof over time as uniform as possible.

However, disadvantageously, this approach requires the introduction in the generator of random numbers of special electronics able to perform the aforesaid driving of the source of photons, thus leading to an increase in the complexity and dimensions of the same generator.

The present invention intends to obviate the aforesaid drawbacks.

In particular, the invention has the purpose of using a semiconductor device for the generation of true random numbers which has a more compact, more robust, less complex structure than the random number generators of the prior art, in particular with respect to those generators that require the use of a (outer) source of photons.

In fact, the compactness of the device of the invention advantageously allows the latter to be integrated in the same semiconductor substrate together with other semiconductor devices.

Yet, another object of the invention is to use a semiconductor device for the generation of true random numbers which allows guaranteeing a high level of entropy in order, at least, to pass the statistical tests established by the NIST.

Another object of the invention is to use a semiconductor device for the generation of true random numbers that allows obtaining a high bit rate in the generation of random sequences of bits.

A further object of the invention is the use of a semiconductor device to generate true random numbers with a high degree of security against possible break-ins and tampering with the internal components thereof.

Not least object of the invention is the use of a semiconductor device to generate true random numbers that is cheaper than the generators of the prior art.

Said objects are achieved by the use of the semiconductor device having the characteristics according to the main claim.

In particular, according to the invention, the semiconductor device used for the generation of random numbers comprises, integrated monolithically, an avalanche diode and injector means of carriers of charges, preferably electrons, operatively associated with said avalanche diode so that said charges generated by said injector means, trigger the avalanche effect of said avalanche diode.

First of all, it should be noted that the photons are not to be considered as "carriers of charges", as they do not carry any electrical charge.

Moreover, unlike photon-based systems, which need a certain active area for detection, advantageously, the use of the aforesaid device for the generation of random numbers allows having a low level of intrinsic noise, since this device is small in size. In fact, it is known that the intrinsic noise of these types of devices depends on the density of imperfections in the silicon. Thus, the smaller size of a device implies a lower probability of the presence of these imperfections within the device itself.

Moreover, as the coupling with external devices is not provided, the use of the aforesaid device for the generation of random numbers advantageously leads to a lower sensitivity to external factors with respect to the use of the devices of the prior art. The level of this sensitivity can in fact influence the efficiency or the quality of the generation of random numbers.

Still advantageously, this semiconductor device, thanks to the compactness and integration thereof, possibly allows implementing a local direct control.

Moreover, advantageously, the compactness of the semiconductor device of the invention possibly allows integrating in the same semiconductor substrate a plurality of such devices of the invention, identical to each other. The density of integration allows in fact improving the performance ("bit rate") for the same area (cost).

The aforesaid objects, together with the advantages that will be mentioned below, will be highlighted during the description of some preferred embodiments of the invention which are given, by way of non-limiting example, with reference to the accompanying drawings, in which:

- Fig. 1 shows, according to a vertical section plane, the topography of a first embodiment of the semiconductor device used for the generation of random numbers according to the invention;
- Fig. 2 shows, according to a vertical section plane, the topography of a second embodiment of the semiconductor device used for the generation of random numbers according to the invention;
- Fig. 3 shows, according to a vertical section plane, the topography of a third embodiment of the semiconductor device used for the generation of random numbers according to the invention;
- Fig. 4 shows, according to a vertical section plane, the topography of a fourth embodiment of the semiconductor device used for the generation of random numbers according to the invention.

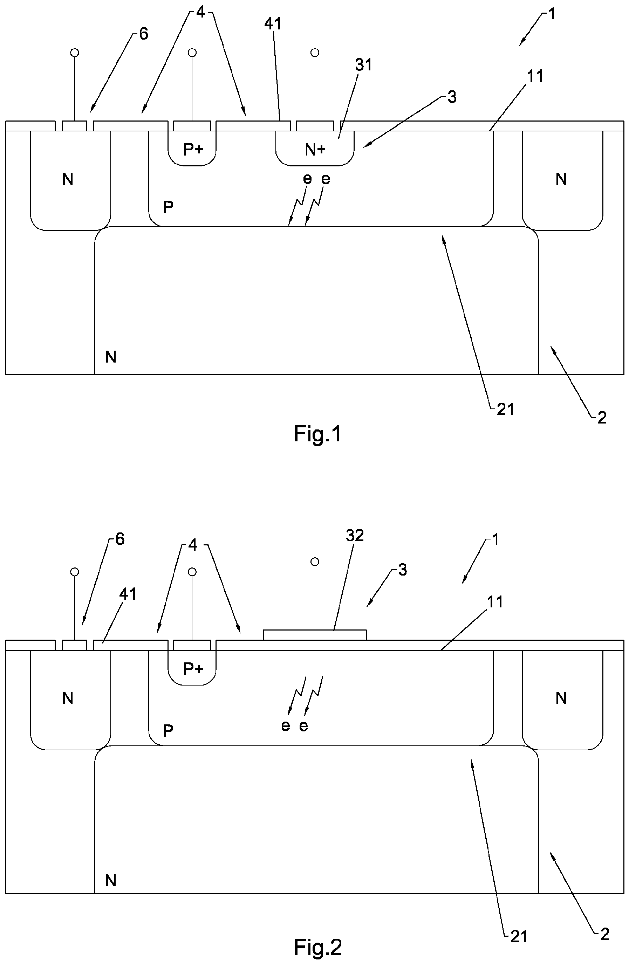

The invention relates to the use for the generation of random numbers of a semiconductor device represented, according to some alternative embodiments, in Figures 1 to 4, where it is indicated as a whole with 1.

In particular, this semiconductor device 1 comprises, integrated monolithically, an avalanche diode 2 and injector means 3 of carriers of charges, in particular of electrons e, operatively associated with this avalanche diode so that the carriers of charges generated by the injector means 3 trigger the avalanche effect of the avalanche diode 2.

Substantially, the idea behind the invention is to trigger the avalanche effect of the avalanche diode 2 by injection into the same semiconductor device 1 of carriers of charges, in particular of electrons e, at most a single electron e, on the junction that defines the aforesaid avalanche diode 2.

Therefore, unlike what is described in the prior art, this avalanche effect is caused by one or more electrons e and not by photons.

According to a variant embodiment of the invention, the carriers of charge could be holes instead of electrons.

According to the invention, the output signal of the avalanche diode 2, taken from the output terminal 6, is digitized and then used to generate a random number through known techniques.

According to the preferred embodiment of the invention, this avalanche diode 2 has the same structure as a SPAD (Single Avalanche PhotoDiode) 21, as shown in Fig. 1.

This SPAD 21, in particular, is inversely polarized, preferably for operating in Geiger mode.

Since the avalanche effect of the SPAD 21 could be triggered by one or more photons, preferably but not necessarily the outer sensitive surface 11 of the semiconductor device 1 is inhibited in the detection of photons by the superposition of a light inhibiting filter 4, in particular by means of a metallisation layer 41 deposited above this outer sensitive surface 11.

Alternatively, to prevent light from impacting the outer sensitive surface 11 of the semiconductor device 1, the latter could be encapsulated in a plastic package, opaque to light.

Preferably, the semiconductor device 1 of the invention also comprises a quenching circuit connected in series with the avalanche diode 2 to stop the avalanche effect, once triggered. Preferably but not necessarily, this quenching circuit is a passive quenching circuit, in detail, a resistance, not shown in the accompanying tables.

As regards the injector means 3, according to the preferred embodiment shown in Fig. 1, they comprise an additional diode 31 adapted to be polarized so as to inject the carriers of charges towards the avalanche diode 2.

More in detail, the charge injection can take place by direct polarization (by overcoming the potential barrier at the junction by the carriers) or by reverse polarization due to thermal generation of minority charges or tunnel effect.

As regards the implementation, the aforesaid diode 31, which constitutes the injector means 3, is defined by establishing an n+ graft in the doped layer p which, together with the underlying doped layer n, in turn defines the SPAD 21. Alternatively, as shown in Fig. 2, these injector means 3 could comprise a metal gate 32 defined above the doped layer p of the SPAD 21. In this case, it would be necessary to provide the metal gate terminal 32 with a pulsed electrical signal so as to inject the aforesaid carriers of charges towards the SPAD 21.

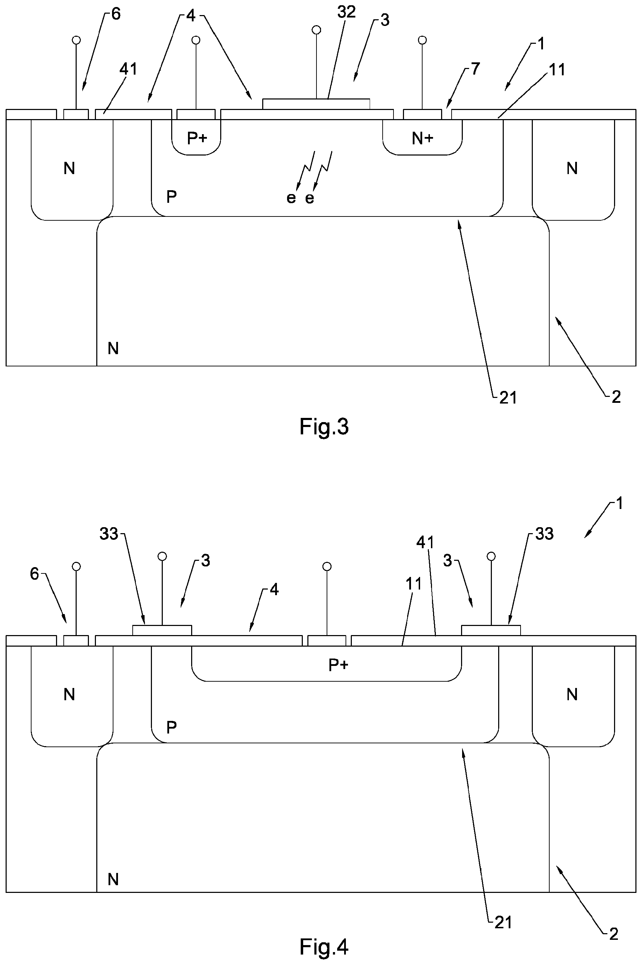

Yet, alternatively, as can be seen in Fig. 3, next to the metal gate 32 it may be possible to implement a n+ bag 7 configured to constitute an electron reservoir with which the inversion channel is populated. In practice, this implementation envisages realising a transistor with source and gate, but without a drain.

Furthermore, according to a different embodiment of the invention, these injector means 3 could be defined by using a high doping in both the layers p and n that constitute the SPAD 21.

In this way, in fact, the probability of the tunnelling effect is increased, thus allowing the avalanche effect to be triggered in the SPAD **21.**

Advantageously, the use of origin events due to the tunnelling effect is not very dependent on temperature with respect to dark events with thermal origin, making the generation of random numbers more robust with respect to any temperature-related influences.

In particular, the less doped layer between the two layers p and n of the avalanche diode **2** must however have a doping degree in the range between 10^17 - 10^18 at./cm2.

Alternatively, as shown in Fig. 4, the tunnelling effect can be implemented in the peripheral area of the SPAD **21,** where the field has higher intensity. In particular, it can be emphasized by modifying the guard ring of the SPAD **21.** In this implementation, in fact, the use of a peripheral metal gate **33** surrounding the active area of the SPAD **21** is provided. The presence of this peripheral gate **33** allows, depending on the voltage applied thereon, the modulation of the intensity of said field with trimming effect of the activity of the SPAD **21.** In other words, the voltage of the peripheral gate **33** would act as an injector for controlling the activity of the SPAD **21.**

As mentioned above, according to the invention, the use of the aforesaid semiconductor device **1** for the generation of random numbers, provides for the output signal of the SPAD **21** to be taken from the aforesaid output terminal **5** and to process it, by digitization and by means of special algorithms, known per se, configured precisely for the generation of random numbers.

Given the compactness of the single semiconductor device **1,** it is not excluded that several semiconductor devices **1** can be integrated in the same semiconductor substrate as described above. This implementation would advantageously allow the flow of random bits to be increased.

Moreover, preferably, this semiconductor device **1** is made with standard CMOS technology.

This advantageously allows integrating one or more of the aforesaid semiconductor devices **1** on any chip as an integral element within a more complex semiconductor device.

Furthermore, the fact of making the aforesaid semiconductor devices **1** with standard CMOS technology advantageously allows implementing in the same semiconductor substrate also the circuitry for processing the output signal by the same devices.

On the basis of the above, therefore, the use of the semiconductor device described above allows achieving all the prefixed objects.

In particular, the object of using a semiconductor device for the generation of true random numbers which has a more compact, more robust, less complex structure than the random number generators of the prior art is achieved.

In fact, the compactness of the device of the invention advantageously allows the latter to be integrated in the same semiconductor substrate together with other semiconductor devices.

Another object achieved by the invention is the use of a semiconductor device for generating true random numbers that allows guaranteeing a high level of entropy in a way, at least, to pass the statistical tests established by the NIST.

A further object achieved is to use a semiconductor device for the generation of true random numbers that allows obtaining a high bit rate in the generation of random sequences of bits.

Yet, the object achieved by the invention is the use of a semiconductor device for generating true random numbers with a high degree of security against possible break-ins and tampering with the internal components thereof.

Finally, the object of using a semiconductor device for generating true random numbers which is cheaper than generators of the prior art is also achieved.

**Claims**

1. Use, for the generation of random numbers, of a semiconductor device (1) of the type comprising, monolithically integrated, an avalanche diode (2) and injector means (3) for carriers of charges, said injector means (3) being operatively associated with said avalanche diode (2) so that said carriers of charges generated by said injector means (3) trigger the avalanche effect of said avalanche diode (2), the output signal of said avalanche diode (2) being processed for the generation of a random number.

2. Use according to claim 1, **characterized in that** said avalanche diode (2) is a SPAD (21).

3. Use according to claim 2, **characterized in that** said SPAD (21) is inversely polarized.

4. Use according to claim 3, **characterized in that** said SPAD (21) is inversely polarized so as to operate in Geiger mode.

5. Use according to any one of the preceding claims, **characterized in that** said semiconductor device (1) has the outer sensitive surface (11) thereof inhibited in the detection of photons by the superposition of a light inhibiting filter (4).

6. Use according to claim 5, **characterized in that** said light inhibiting filter (4) comprises a metallisation layer (41) deposited above said outer sensitive surface (11).

7. Use according to any one of the preceding claims, **characterized in that** said injector means (3) comprise a diode (31) adapted to be polarized so as to inject said carriers of charges towards said avalanche diode (2).

8. Use according to any one of claims 1 to 6, **characterized in that** said injector means (3) comprise a metal gate (32) to which a pulsed electrical signal is provided so as to inject said carriers of charges towards said avalanche diode (2).

9. Use according to any one of claims 1 to 6, **characterized in that** said injector means (3) are obtained by raising the doping level of the layers n and p which constitute said avalanche diode (2) so as to increase the probability of the tunnelling effect and the triggering of the avalanche effect of said avalanche diode (2).

10. Use according to any one preceding claim, **characterized in that** said semiconductor device (1) comprises a quenching circuit connected in series with said avalanche diode (2).

11. Use according to any one preceding claim, **characterized in that** said carriers of charges are electrons (e).

12. Use according to any one of claims 1 to 10, **characterized in that** said carriers of charges are holes.

13. Use according to any one preceding claim, **characterized in that** said semiconductor device (1) is made in standard CMOS technology.

Fig.1

Fig.2

Fig.3

Fig.4

Europäisches
Patentamt

European
Patent Office

Office européen
des brevets

# EUROPEAN SEARCH REPORT

Application Number

EP 19 20 2007

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/073802 A1 (TRENTINO SVILUPPO SPA [IT]) 26 April 2018 (2018-04-26)<br>* page 8, line 1 - page 11, line 4; claim 4; figure 5 *<br>* page 13, line 5 - line 35 * | 1-13 | INV.<br>G06F7/58 |
| X | KHANMOHAMMADI ABBAS ET AL: "A Monolithic Silicon Quantum Random Number Generator Based on Measurement of Photon Detection Time",<br>IEEE PHOTONICS JOURNAL, IEEE, USA,<br>vol. 7, no. 5,<br>31 October 2015 (2015-10-31), pages 1-13,<br>XP011586189,<br>DOI: 10.1109/JPHOT.2015.2479411<br>* Chapter 2, 3, 4, 5; figure 2 * | 1-13 | |
| A | US 2010/013458 A1 (LANY MARC [CH] ET AL) 21 January 2010 (2010-01-21)<br>* paragraph [0011] - paragraph [0030] *<br>* paragraph [0088] * | 1-12 | |

TECHNICAL FIELDS
SEARCHED      (IPC)

G06F

The present search report has been drawn up for all claims

| Place of search | Date of completion of the search | Examiner |
|---|---|---|
| Munich | 4 February 2020 | Tenbieg, Christoph |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 20 2007

This annex lists the patent family members relating to the patent documents cited in the above-mentioned European search report.
The members are as contained in the European Patent Office EDP file on
The European Patent Office is in no way liable for these particulars which are merely given for the purpose of information.

04-02-2020

| Patent document cited in search report | | | Publication date | Patent family member(s) | | | Publication date |
|---|---|---|---|---|---|---|---|
| WO 2018073802 | A1 | | 26-04-2018 | CN | 109804348 | A | 24-05-2019 |
| | | | | EP | 3529694 | A1 | 28-08-2019 |
| | | | | KR | 20190055179 | A | 22-05-2019 |
| | | | | US | 2019205100 | A1 | 04-07-2019 |
| | | | | WO | 2018073802 | A1 | 26-04-2018 |
| US 2010013458 | A1 | | 21-01-2010 | EP | 1936390 | A1 | 25-06-2008 |
| | | | | EP | 2095137 | A1 | 02-09-2009 |
| | | | | US | 2010013458 | A1 | 21-01-2010 |
| | | | | WO | 2008074789 | A1 | 26-06-2008 |

EPO FORM P0459

For more details about this annex : see Official Journal of the European Patent Office, No. 12/82